(19) **Europäisches Patentamt**

**European Patent Office**

**Office européen des brevets**

(11) Veröffentlichungsnummer: **0 342 642**
**A1**

(12) **EUROPÄISCHE PATENTANMELDUNG**

(21) Anmeldenummer: **89108858.5**

(22) Anmeldetag: **17.05.89**

(51) Int. Cl.⁴: **B21K 1/00 , B23P 15/00**

(30) Priorität: **18.05.88 DE 3816956**

(43) Veröffentlichungstag der Anmeldung:
**23.11.89 Patentblatt 89/47**

(84) Benannte Vertragsstaaten:
**BE CH DE ES FR GB IT LI NL SE**

(71) Anmelder: **Hirschvogel, Manfred, Dr. Ing.**
**Buchstrasse 17**
**D-8915 Fuchstal-Leeder(DE)**

(72) Erfinder: **Hirschvogel, Manfred, Dr.-Ing.**
**Buchstrasse 1**
**D-8915 Fuchstal-Leeder(DE)**
Erfinder: **Kettner, Peter**
**Säulingstrasse 13**
**D-8911 Denklingen(DE)**

(74) Vertreter: **Schmidt-Evers, Jürgen, Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer Postfach**
**26 01 32**
**D-8000 München 26(DE)**

(54) **Verfahren zur Herstellung eines Werkstückes aus einem länglichen Rohling oder Zwischenprodukt.**

(57) Ein längliches Werkstück (2) mit zwei Endabschnitten (5,10) und einem dazwischenliegenden mittleren Abschnitt (3), der einen geringeren Querschnitt als die Endabschnitte (5,10) hat, wird aus einem Rohling (1) dadurch hergestellt, daß nur einem Teil (3a) des mittleren Abschnittes (3) beispielsweise durch spanabhebende Bearbeitung die endgültige Querschnittsform gegeben wird und daß der übrige Teil des mittleren Abschnittes (3) für eine endgültige Querschnittsform durch Kaltverformen mittels einer mehrteiligen Reduzierform (4) erhält. Der zunächst im Querschnitt reduzierte Teil (3a) des mittleren Abschnittes (3) gestattet es, daß die Formteile (4a,4b) der mehrteiligen Reduzierform (4) um diesen Teil (3a) gelegt und anschließend der übrige Teil des mittleren Abschnittes (3) durch die Reduzierform (4) kalt hindurchgepreßt wird.

FIG. 3

# Verfahren zur Herstellung eines Werkstückes aus einem länglichen Rohling oder Zwischenprodukt

Die Erfindung betrifft ein Verfahren zum Herstellen eines Werkstückes aus einem länglichen Rohling oder Zwischenprodukt, wobei das Werkstück einen mittleren Abschnitt aufweist, der über seine Länge einen gleichen Profilquerschnitt hat und zumindest in einer quer zu seiner Länge verlaufenden Richtung eine geringere Abmessung hat als die beiden Endabschnitte, welche mit den entsprechenden Endabschnitten des Rohlings bzw. Zwischenproduktes übereinstimmen, und wobei der Rohling bzw. das Zwischenprodukt in seinem mittleren Abschnitt so bearbeitet wird, daß er dort seinen endgültigen Profilquerschnitt erhält.

Werkstücke der hier betrachteten Art sind beispielsweise Achswellen oder Gelenkwellen-Mittelstücke für Automobile. Sie sind in der Regel rotationssymmetrisch; allerdings müssen sie dies nicht sein. Rotationssymmetrische Werkstücke der hier betrachteten Art werden aus länglichen zylindrischen Rohlingen hergestellt, indem der mittlere Abschnitt durch Drehen, also spanabhebend in seinem Querschnitt gegenüber den beiden Endabschnitten reduziert wird.

Der Erfindung liegt die Aufgabe zugrunde, das Verfahren zur Herstellung eines solchen Werkstückes dahingehend zu verbessern, daß die Bearbeitungszeit verkürzt wird.

Die Aufgabe ist erfindungsgemäß durch folgende Verfahrensschritte gelöst:

a) es wird nur ein Teil des mittleren Abschnittes des Rohlings oder Zwischenprodukts beispielsweise durch Drehen so bearbeitet, daß er dort seinen endgültigen Profilquerschnitt erhält.

b) um den den endgültigen Profilquerschnitt aufweisenden Teil wird eine in Längsrichtung geteilte Reduzierform gelegt, deren Innenquerschnitt gleich dem endgültigen Profilquerschnitt ist,

c) der Rohling bzw. das Zwischenprodukt wird in Längsrichtung über die Länge des mittleren Abschnittes durch die Reduzierform hindurchgepreßt,

d) die Reduzierform wird von dem nunmehr fertigen Werkstück wieder entfernt.

Die Erfindung geht von folgender Überlegung aus: Es ist weniger zeitaufwendig, den Querschnitt des mittleren Abschnittes des Rohlings bzw Zwischenproduktes durch Umformen mit einer Reduzierform zu reduzieren, als beispielsweise durch spanabhebende Bearbeitung wie Drehen oder durch eine nicht-spanabhebende Bearbeitung wie beispielsweise Rundhämmern. Da nun aber der Querschnitt der beiden Endabschnitte größer als der Querschnitt des mittleren Abschnittes sein soll, ist es nicht ohne weiteres möglich, den mittleren Abschnitt durch eine Reduzierform hindurchzuführen, deren Innenquerschnitt zwangsläufig geringer als der Querschnitt der Endabschnitte sein muß. Aus diesem Grunde wird auf herkömmliche Weise, also beispielsweise durch spanabhebende Bearbeitung wie Drehen oder durch nicht-spanabhebende Bearbeitung wie Rundhämmern, nur ein Teil des mittleren Abschnittes in seinem Querschnitt reduziert. Um diesen reduzierten Teil kann nun eine in Durchtrittsrichtung (Längsrichtung) des Rohlings bzw. Zwischenproduktes geteilte Form gelegt und der Teil des mittleren Abschnitts des Rohling bzw. des Zwischenproduktes dann kalt hindurchgepreßt werden. Für dieses Umformen des übrigen Teiles des mittleren Abschnittes mittels einer Reduzierform ist weniger Zeit erforderlich, als wenn dieser übrige Teil in der gleichen Weise wie der erstgenannte Teil bearbeitet werden würde, also beispielsweise durch Drehen oder Rundhämmern.

Der Rohling bzw. das Zwischenprodukt wird vorzugsweise kalt durch die Reduzierform hindurchgepreßt. Das erfindungsgemäße Verfahren eignet sich vorzugsweise zur Herstellung von solchen Werkstücken, die nicht in anderer Weise, beispielsweise dadurch hergestellt werden können, daß man den Durchmesser ihrer Endabschnitte durch Stauchen vergrößert und zwar deshalb nicht, weil das Stauchverhältnis zu groß ist und eine wirtschaftliche Herstellung aus diesem Grunde nicht mehr gewährleistet ist.

Die Erfindung betrifft ferner eine Vorrichtung zur Durchführung des Verfahrens, welche gekennzeichnet ist durch eine in Durchtrittsöffnung (Längsrichtung) des Rohlings bzw. Zwischenproduktes geteilte Reduzierform, die im zusammengesetzten Zustand der Formteile einen Innenquerschnitt hat, der gleich dem endgültigen Querschnitt des mittleren Abschnittes des herzustellenden Werkstückes ist, und die sich außen in Durchtrittsrichtung (Längsrichtung) des Rohlings oder Zwischenproduktes konisch verjüngenden, und die ferner gekennzeichnet ist durch ein Verriegelungsteil mit einer in Durchtrittsrichtung (Längsrichtung) des Rohlings oder Zwischenproduktes sich konisch verjüngende Ausnehmung zur Aufnahme der geteilten Reduzierform.

Der Außenkonus der Reduzierform und der dazu passende Innenkonus des Verriegelungsteiles gewährleisten einen festen Zusammenhalt der Formteile der Reduzierform und darüberhinaus sogar eine Vorspannung, mit der Folge, daß sich die Formteile auch bei einem größeren Formdruck nicht auseinanderbewegen.

Ein Ausführungsbeispiel der Erfindung ist nachfolgend anhand der Zeichnungen beschrieben.

Es zeigen:

Figur 1 einen zylindrischen Rohling bzw. ein entsprechendes Zwischenprodukt in Seitenansicht;

Figur 2 den in Figur gezeigten Rohling bzw. das Zwischenprodukt, bei dem ein Teil des mittleren Abschnittes durch Abdrehen im Querschnitt reduziert ist;

Figur 3 eine noch geöffnete zweiteilige Reduzierform, die den im Querschnitt reduzierten Teil des mittleren Abschnittes des Rohlings bzw. des Zwischenproduktes umgibt, sowie darunter ein Verriegelungsteil;

Figur 4 einen Schnitt IV-IV durch Figur 3;

Figur 5 die geschlossene zweiteilige Reduzierform mit dem Rohling bzw. Zwischenprodukt, eingesetzt in das Verriegelungsteil;

Figur 6 einen Schnitt VI-VI durch Figur 5;

Figur 7 eine Ansicht wie Figur 5, wobei jedoch der Rohling bzw. das Zwischenprodukt über die gesamte Länge seines mittleren Abschnittes durch die Reduzierform hindurchgezogen worden ist;

Figur 8 das fertige Werkstück, die geöffnete Reduzierform und das Verriegelungsteil;

Figur 9 das fertige Werkstück allein.

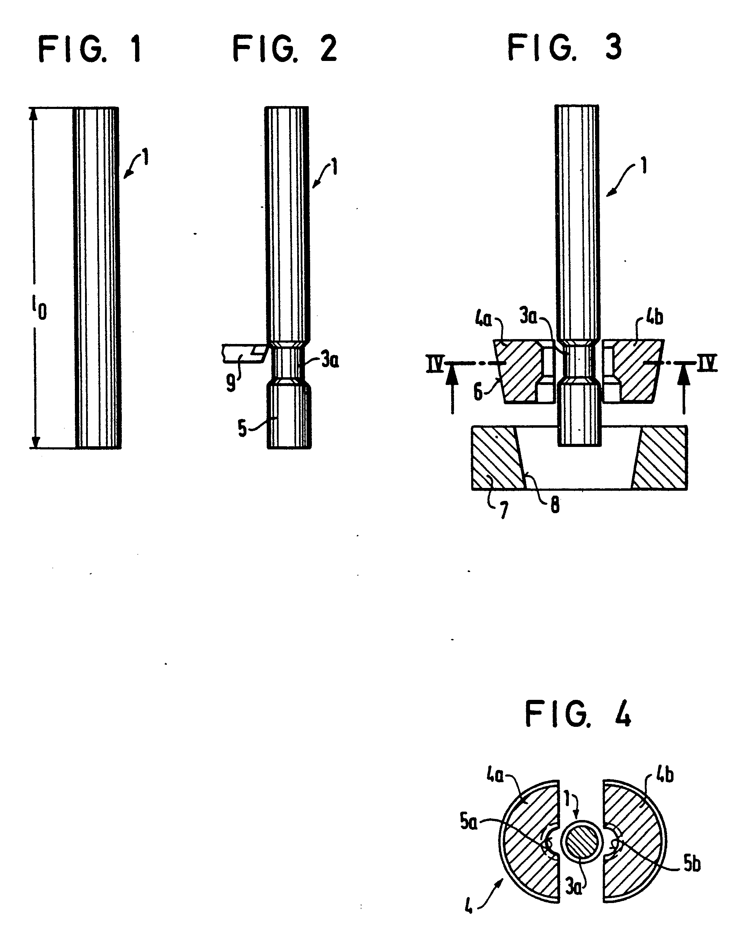

Figur 1 zeigt einen zylindrischen Rohling 1 bzw. ein entsprechendes Zwischenprodukt der Länge $l_0$.

Von dem Rohling 1 bzw. dem Zwischenprodukt wird gemäß Figur 2 ein Teil 3a des mittleren Abschnittes mit einem Drehmeißel 9 bearbeitet, so daß der Querschnitt dieses Teiles 3a geringer ist als der Querschnitt des übrigen Rohlings 1 bzw. Zwischenproduktes. Der abgedrehte Teil 3a wird vorzugsweise an einem Ende des mittleren Abschnittes vorgesehen, und zwar dort, wo der entsprechende verdickte Endabschnitt 5 beginnt.

Gemäß Figur 3 wird um den abgedrehten Teil 3a des mittleren Abschnittes des Rohlings 1 bzw. Zwischenproduktes eine in Längsrichtung geteilte Reduzierform 4 gelegt. Diese besteht gemäß Figur 4 aus zwei halbzylindrischen Formteilen 4a,4b mit einer an den reduzierten Querschnitt des Teiles 3a angepaßten halbkreisförmigen Ausnehmung 5a, 5b. Die beiden Ausnehmungen 5a, 5b ergeben im zusammengesetzten Zustand der beiden Formteile 4a,4b eine Öffnung mit einem Querschnitt, der gleich dem Querschnitt des abgedrehten Teiles 3a des mittleren Abschnittes des Rohlings 1 bzw. Zwischenproduktes ist.

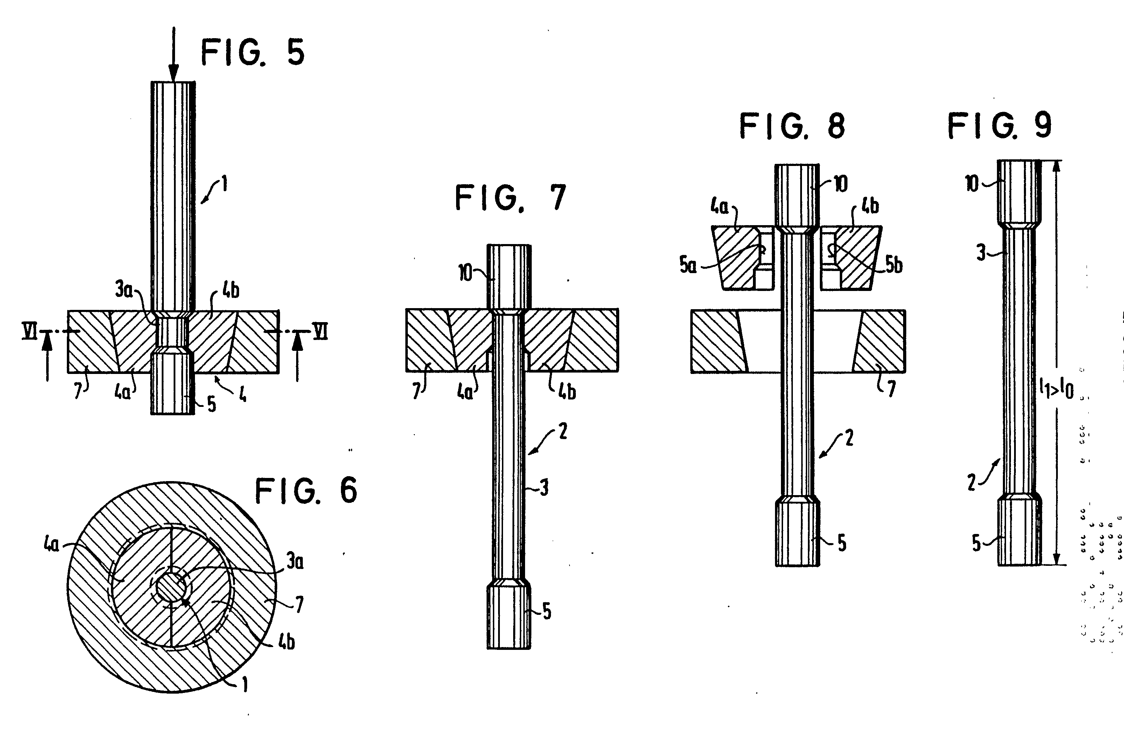

Wie man aus den Figuren 3 bis 5 entnehmen kann, verjüngt sich die Reduzierform außen in Durchtrittsrichtung des Rohlings 1 bzw. Zwischenproduktes. Die Durchtrittsrichtung ist in Figur 5 mit einem Pfeil angedeutet und verläuft in Längsrichtung des Rohlings 1 bzw. Zwischenproduktes. Zu der mehrteiligen Reduzierform gehört ein Verriegelungs teil 7, welches im vorliegenden Fall ringförmig ausgebildet ist. Das Verriegelungsteil 7 weist innen eine Ausnehmung 8 auf, die an die Form der Reduzierform 4 angepaßt ist und zu ihrer Aufnahme dient. Die Ausnehmung 8 verjüngt sich ebenfalls in Durchtrittsrichtung des Rohlings bzw. Zwischenproduktes. Wenn sich die Reduzierform 4 in dem Arretierteil 7 befindet, so stehen die Formteile 4a, 4b unter Vorspannung und können sich auch unter dem beim Hindurchpressen des Rohlings 1 bzw. Zwischenproduktes durch die Reduzierform 4 auftretenden radialen Druck nicht auseinanderbewegen.

Figur 7 zeigt den Zustand, daß der Rohling 1 bzw. das Zwischenprodukt über die gesamte Länge seines mittleren Abschnittes durch die Reduzierform 4 kalt hindurchgepreßt worden ist. Der Rohling 1 bzw. das Zwischenprodukt ist nunmehr in das herzustellende Werkstück 2 umgeformt worden. Dieses Werkstück 2 weist zwei Endabschnitte 5,10 mit dem ursprünglichen Durchmesser des Rohlings 1 bzw. Zwischenproduktes auf, wobei der mittlere Abschnitt 3 gegenüber den beiden Endabschnitten 5,10 über die gesamte Länge des mittleren Abschnittes im Querschnitt reduziert ist.

Durch Entfernen der Reduzierform 4 aus dem Verriegelungsteil 7 sowie durch Auseinanderbewegen der Formteile kann das fertige Werkstück 2 nunmehr gemäß Figur 8 aus der Reduzierform 4 entnommen werden.

Das fertige Werkstück 2 ist nochmals in Figur 9 dargestellt. Die Länge des fertigen Werkstückes $l_1$ ist durch die Materialumformung im mittleren Abschnitt 3 größer als die Länge $l_0$ des ursprünglichen Rohlings 1 bzw. Zwischenproduktes.

**Ansprüche**

1. Verfahren zum Herstellen eines Werkstückes aus einem länglichen Rohling oder Zwischenprodukt, wobei das Werkstück einen mittleren Abschnitt aufweist, der über seine Länge einen gleichen Profilquerschnitt hat und zumindest in einer quer zu seiner Länge verlaufenden Richtung eine geringere Abmessung hat als die beiden Endabschnitte, welche mit den entsprechenden Endabschnitten des Rohlings bzw. Zwischenproduktes übereinstimmen, und wobei der Rohling bzw. das Zwischenprodukt in seinem mittleren Abschnitt so bearbeitet wird, daß er dort seinen endgültigen Profilquerschnitt erhält, **gekennzeichnet durch** folgende Verfahrensschritte:

a) es wird nur ein Teil des mittleren Abschnitts des Rohlings oder Zwischenprodukts so bearbeitet, daß er dort seinen endgültigen Profilquerschnitt erhält,

b) um den den endgültigen Profilquerschnitt aufweisenden Teil wird eine in Längsrichtung geteilte Reduzierform gelegt, deren Innenquerschnitt gleich dem endgültigen Profilquerschnitt ist,

c) der Rohling bzw. das Zwischenprodukt wird in Längsrichtung über die Länge des mittleren Abschnitts durch die Reduzierform hindurchgepreßt,

d) die Reduzierform wird von dem nunmehr fertigen Werkstück wieder entfernt.

2. Verfahren nach Anspruch 1, dadurch gekennzeichnet, daß der Rohling bzw. das Zwischenprodukt gemäß Verfahrensschritt c) kalt durch die Reduzierform hindurchgepreßt wird.

3. Verfahren nach einem der vorhergehenden Ansprüche, dadurch gekennzeichnet, daß die Bearbeitung nur eines Teils des mittleren Abschnitts des Rohlings oder Zwischenprodukts gemäß Verfahrensschritt a) durch ein spanabhebendes Bearbeitungsverfahren oder durch Hämmern erfolgt.

4. Vorrichtung zur Durchführung des Verfahrens nach einem der Ansprüche 1 bis 3, gekennzeichnet durch eine in Durchtrittsrichtung (Längsrichtung) des Rohlings bzw. Zwischenprodukts (1) geteilte Reduzierform (4), die im zusammengesetzten Zustand der Formteile (4a,4b) einen Innenquerschnitt hat, der gleich dem endgültigen Querschnitt des mittleren Abschnitts (3) des herzustellenden Werkstücks (2) ist und die sich außen in Durchtrittsrichtung (Längsrichtung) des Rohlings oder Zwischenproduktes (1) konisch verjüngt, und durch ein Verriegelungsteil (7) mit einer in Durchtrittsrichtung (Längsrichtung) des Rohlings oder Zwischenproduktes (1) sich konisch verjüngenden Ausnehmung (8) zur Aufnahme der geteilten Reduzierform (4).

# FIG. 1

# FIG. 2

# FIG. 3

# FIG. 4

FIG. 5

FIG. 6

FIG. 7

FIG. 8

FIG. 9

EP 0 342 642 A1

Europäisches
Patentamt

EUROPÄISCHER RECHERCHENBERICHT

Nummer der Anmeldung

EP 89 10 8858

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 655 240 (PRINZ & BUFE) * Insgesamt * | 1-3 | B 21 K 1/00 B 23 P 15/00 |
| Y | | 4 | |
| | --- | | |
| Y | GB-A- 467 546 (LEE) * Insgesamt * | 4 | |
| | --- | | |
| A | US-A-2 942 337 (BUDERUS'SCHE EISENWERKE) | 1-4 | |
| | ----- | | |

| | |
|---|---|
| | RECHERCHIERTE SACHGEBIETE (Int. Cl.4) |
| | B 23 P B 21 K |

Der vorliegende Recherchenbericht wurde für alle Patentansprüche erstellt

| Recherchenort | Abschlußdatum der Recherche | Prüfer |
|---|---|---|
| DEN HAAG | 02-08-1989 | RIS M. |